# FASCICULE DE BREVET EUROPEEN

(11) **EP 4 135 917 B1**
(45) Date de publication et mention de la délivrance du brevet: **01.05.2024**
(21) Numéro de dépôt: 21718841.6
(22) Date de dépôt: 12.04.2021
(51) Int. Cl.: B21K 7/00, B21K 23/00, B64C 1/14, B64C 1/12

(54) **PROCÉDÉ DE FABRICATION D'UNE PORTE D'AÉRONEF MONOLITIQUE PAR MATRIÇAGE ET USINAGE**
VERFAHREN ZUR HERSTELLUNG EINER MONOLITHISCHEN FLUGZEUGTÜR DURCH SCHMIEDEN UND SPANABHEBENDE BEARBEITUNG
METHOD FOR MANUFACTURING A MONOLITHIC AIRCRAFT DOOR BY FORGING AND MACHINING

(30) Priorité: 17.04.2020 FR 2003864
(43) Date de publication de la demande: 22.02.2023
(73) Titulaire: Aubert & Duval, 75015 Paris (FR)
(72) Inventeur: BOURGEON, Ludovic, 63340 SAINT GERMAIN LEMBRON (FR); BLANCKAERT, Arnaud, 63340 SAINT GERVAZY (FR); GAIL, Philippe, 09700 BRIE (FR); GUYONNET, Xavier, 31300 TOULOUSE (FR)
(74) Mandataire: Junca, Eric
(86) Numéro de dépôt international: PCT/EP2021/059411
(87) Numéro de publication internationale: WO 2021/209372

(56) Documents cités:
- WO-A1-03/104080
- US-A1- 2009 113 977

## Description

### DOMAINE TECHNIQUE

L'invention relève du domaine de l'aéronautique et concerne les procédés de fabrication de portes d'aéronef. Ces portes sont par exemple des portes d'embarquement de passagers, les portes d'issue de secours, les portes de soute ou tout autre ouvrant destiné à refermer le fuselage d'un aéronef.

### ART ANTÉRIEUR

La fabrication des portes d'aéronef est généralement complexe et onéreuse compte tenu des contraintes propres au domaine de l'aéronautique. Les portes d'embarquement de passagers, par exemple, sont destinées à refermer de larges ouvertures pratiquées dans le fuselage de l'aéronef. Ces portes doivent garantir une tenue mécanique adéquate au niveau de l'ouverture refermée, en prolongement de la structure de l'aéronef. Ces portes doivent également garantir une certaine étanchéité à l'air pour le maintien d'une forte pression différentielle durant le vol entre l'intérieur de la cabine et l'extérieur de l'aéronef. Ces portes embarquent de plus de nombreux éléments tels que des dispositifs de sécurité, des mécanismes de commande, guidage, et verrouillage, ou encore des éléments de finition, ce qui en fait des assemblages lourds et complexes.

Une large majorité des portes d'aéronef actuellement en service sont fabriquées par assemblage de nombreuses pièces séparées. Des poutres structurelles et des cadres de renfort sont assemblés et sont fixés sur une peau extérieure réalisée à partir d'une tôle ou d'une feuille de matériau. D'autres éléments fonctionnels sont rapportés sur cet ensemble, par exemple des butées permettant le verrouillage de la porte. Chaque élément de la porte est produit et contrôlé séparément et l'ensemble fait ensuite l'objet d'un assemblage minutieux par la pose de fixations telles que des rivets ou des vis.

Par exemple, une porte d'embarquement de passagers d'un avion de ligne est typiquement réalisée d'un assemblage de l'ordre de 150 pièces et de 1 500 fixations.

Ces procédés de fabrication classiques des portes d'aéronef permettent de remplir les critères de sécurité propres à l'aéronautique, notamment par la possibilité de contrôle de chacune des pièces et par le suivi rigoureux qui est permis dans ce type d'industrie lors d'un tel assemblage complexe. C'est la raison pour laquelle ce type de procédé d'assemblage et les portes correspondantes sont actuellement largement répandus dans l'aéronautique.

Cependant, ces procédés ont notamment les inconvénients suivants :
- ils nécessitent des moyens de mise en oeuvre exigeants, notamment pour la mise en position et le calage des pièces en vue de l'assemblage avec des fixations ;
- le grand nombre d'opérations impliquées pour la préparation à la pose des fixations (perçages, fraisures, etc.) entraine autant de possibilités d'obtenir une non-conformité, ce qui augmente le taux de rebut d'une production ;
- la pose des fixations tels que des rivets est longue et fastidieuse, notamment pour les pièces internes et les recoins peu accessibles ;
- les liaisons mécaniques au niveau des fixations sont des points critiques pour les propriétés mécaniques de l'ensemble. En statique, des phénomènes de cisaillement des fixations et de matage des trous de fixation, relatifs au passage des efforts au niveau de ces points critiques, doivent être palliés. De plus, la présence des trous de fixation impacte défavorablement la résistance à la fatigue, ce qui est lié à la présence de sur-contraintes qui peuvent initier des fissures. Les portes d'aéronef devant répondre à des critères de sécurité élevés, elles font donc l'objet d'un dimensionnement notamment au niveau des fixations, ce qui augmente la masse de la porte.

Ces procédés de l'art antérieur sont donc longs, coûteux, et conduisent à des portes d'aéronef dont la masse gagnerait à être réduite.

Il existe de nombreuses tentatives d'améliorer la fabrication des portes d'aéronef bien qu'aucune ne se soit véritablement imposée jusqu'à présent.

Par exemple, la demande de brevet US6817574 propose de mouler d'une seule pièce une porte en alliage d'aluminium ou magnésium, par un procédé de moulage au sable. Les formes de la porte, et en particulier sa membrure, ont été adaptées à un tel procédé, notamment pour permettre le retrait des noyaux de moulage. Le procédé décrit dans ce document résout un certain nombre d'inconvénients cités ci-dessus mais impose cependant un procédé qui reste long et délicat par le nombre d'opérations qu'il impose et qui conduit à des portes d'aéronef qui pourraient être optimisées du point de vue des caractéristiques mécaniques et de la masse.

Par ailleurs, la demande de brevet US2007/0007390 décrit une porte d'aéronef faite d'une seule pièce qui est entièrement usinée à partir d'un brut forgé. De même, ce document décrit un procédé de fabrication de porte d'aéronef qui résout un certain nombre des inconvénients listés ci-dessus mais qui conduit cependant à un procédé onéreux par la quantité d'opérations d'usinage qu'il nécessite et conduit à la production d'une porte nécessitant un grand nombre de renforts au niveau de sa membrure pour présenter une rigidité adéquate.

### EXPOSÉ DE L'INVENTION

L'invention a pour but d'améliorer les procédés de fabrication de porte d'aéronef de l'art antérieur.

A cet effet, l'invention vise un procédé de fabrication d'une porte d'aéronef présentant une structure monolithique comprenant d'une seule pièce une peau extérieure et une membrure interne, la membrure interne comportant au moins un tronçon présentant : une âme rattachée transversalement à la peau extérieure ; et une semelle opposée à la peau extérieure ; ce procédé comportant les étapes suivantes :
- production d'une ébauche forgée d'épaisseur sensiblement constante, à partir d'un alliage métallique matriçable ;
- matriçage de l'ébauche forgée entre une matrice inférieure sensiblement lisse et une matrice supérieure définissant des alvéoles, une distance de garde étant maintenue entre la matrice inférieure et la matrice supérieure, et obtention d'une pièce matricée à structure alvéolaire présentant une face ouverte et une face fermée par une paroi dont l'épaisseur correspond à la distance de garde ;
- usinage des parois internes de la structure alvéolaire de la pièce matricée pour définir au moins un renfoncement délimité : par une âme reliant la face fermée et la face ouverte ; et par une semelle saillante sensiblement perpendiculairement à l'âme, sur la face ouverte de la pièce matricée.

Un tel procédé réduit drastiquement le nombre d'opérations nécessaires à la production d'une porte d'aéronef. Même par rapport aux procédés alternatifs relatifs aux demandes de brevet citées précédemment, le procédé selon l'invention réduit également le nombre d'opérations et conduit à une fabrication d'un cout inférieur.

De plus, le procédé selon l'invention produit une porte d'aéronef dont les caractéristiques mécaniques sont améliorées. La tenue statique et en fatigue, ainsi que la rigidité de la porte, sont renforcées par la conception en un seul bloc matricé présentant : une face externe constituée de la peau externe ; une face interne constituée des semelles de la membrure ; une jonction entre ces deux faces, constituée par les âmes de la membrure. Les techniques de matriçage permettent une orientation des fibres de l'alliage qui se combinent avec cette conformation.

Le dimensionnement des éléments de la porte d'aéronef peut être ainsi revu à la baisse, en limitant le surdimensionnement et en appliquant des coefficients de sécurité plus faibles lors de la conception.

En plus des caractéristiques mécaniques améliorées, la porte d'aéronef est également plus légère dans un contexte où la réduction de la masse des avions est fortement recherchée pour l'économie de carburant et la réduction des émissions.

Par ailleurs, le procédé selon l'invention permet de jouer sur les paramètres du matriçage et permet ainsi de moduler les caractéristiques mécanique résultant du matriçage, au plus juste du besoin.

Le procédé de fabrication selon l'invention peut comporter les caractéristiques additionnelles suivantes, seules ou en combinaison :
- la matrice supérieure comporte des poinçons entourés d'évidements définissant lesdites alvéoles ;
- la matrice inférieure et la matrice supérieure sont cintrées selon une courbure définissant une courbure pour la porte d'aéronef (la porte d'aéronef pouvant être à simple ou double courbure) ;
- la structure alvéolaire de la pièce matricée est réalisée par des nervures se croisant ;
- des nervures sont sensiblement perpendiculaires à la direction de courbure, et, parmi ces nervures sensiblement perpendiculaires à la direction de courbure, celles situées plus proche du centre de la pièce matricée, dans la direction de courbure, présentent une épaisseur inférieure à celles situées plus loin du centre ;
- parmi lesdites nervures sensiblement perpendiculaires à la direction de courbure, celles situées plus proche du centre de la pièce matricée, selon la direction de courbure, présentent des parois de flanc formant un angle inférieur à l'angle formé par les parois de flanc de celles situées plus loin du centre ;
- l'ébauche forgée est sensiblement plane et est de plus cintrée par l'opération de matriçage ; ou l'ébauche forgée est pré-cintrée selon la même courbure que le cintrage des matrices ;
- l'étape d'usinage comporte une opération d'usinage par une fraise trois tailles usinant simultanément le dessous de la semelle et une portion de l'âme correspondante ;
- l'étape d'usinage comporte une opération d'usinage par une fraise conique d'une portion de l'âme située sous une semelle, l'axe de la fraise étant oblique par rapport au plan de l'âme ;
- durant l'opération de matriçage, des blocs de matière sont formés sur la structure alvéolaire de la pièce matricée, et le procédé comporte une étape d'usinage supplémentaire de ces blocs en butées de verrouillage de la porte d'aéronef.

### PRÉSENTATION DES FIGURES

D'autres caractéristiques et avantages de l'invention ressortiront de la description non limitative qui suit, en référence aux dessins annexés dans lesquels :
- [Fig.1] La figure 1 représente la face interne d'une porte d'aéronef obtenue par un procédé selon l'invention ;
- [Fig.2] La figure 2 représente la face externe de la porte d'aéronef de la figure 1 ;
- [Fig.3] La figure 3 illustre l'opération de matriçage du procédé de fabrication selon l'invention ;
- [Fig.4] La figure 4 est une vue en coupe de la pièce matricée obtenue par l'opération de matriçage de la figure 3 ;
- [Fig.5] La figure 5 est une vue en perspective de la pièce matricée de la figure 4 ;
- [Fig.6] La figure 6 représente la pièce matricée de la figure 3 avec son profil d'usinage ;
- [Fig.7] La figure 7 est une vue en coupe selon un plan horizontal de la porte de la figure 1 ;
- [Fig.8] La figure 8 est une vue agrandie d'une coupe selon un plan vertical de la porte de la figure 1 ;
- [Fig.9] La figure 9 illustre une opération d'usinage du procédé selon l'invention ;
- [Fig.10] La figure 10 illustre une autre opération d'usinage du procédé selon l'invention ;
- [Fig.11] La figure 11 représente une variante de la porte de la figure 1.

### DESCRIPTION DÉTAILLÉE

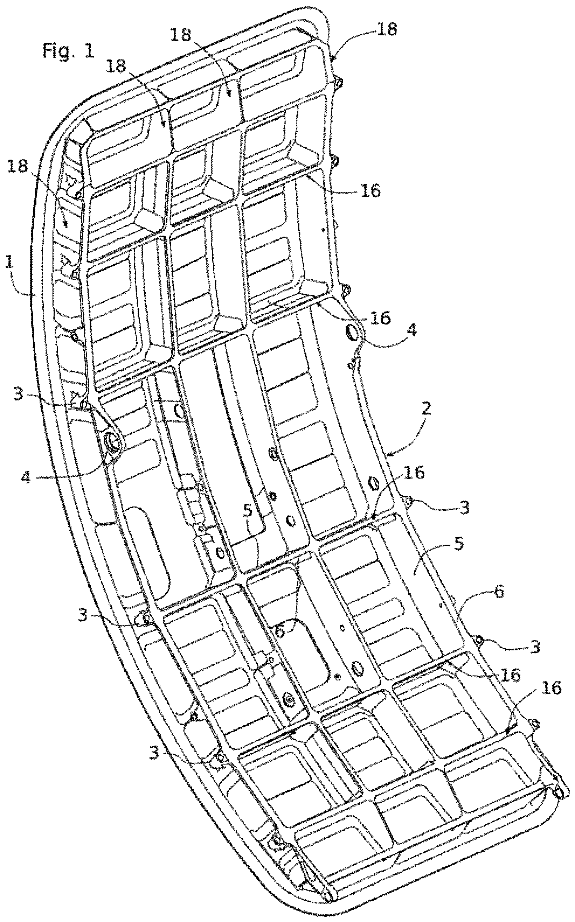

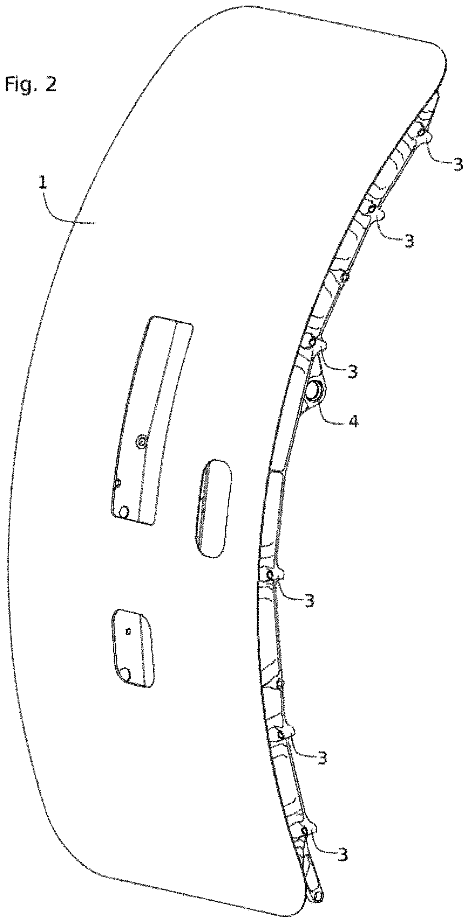

Les figures 1 et 2 représentent en perspective une porte d'aéronef obtenue par le procédé selon l'invention. Dans le présent exemple, cette porte d'aéronef est une porte d'embarquement de passagers pour un avion de ligne et ses dimensions sont de l'ordre de deux mètres de hauteur pour un mètre de largeur. La figure 1 illustre la face interne de cette porte, c'est-à-dire la face qui est tournée vers l'intérieur de la cabine de l'aéronef. La figure 2 illustre la face externe de la porte. La porte illustrée est une structure mécanique terminée, ne nécessitant pas d'autres éléments structurels, et prête à recevoir les différents équipements et mécanismes rapportés, nécessaires à sa fonction.

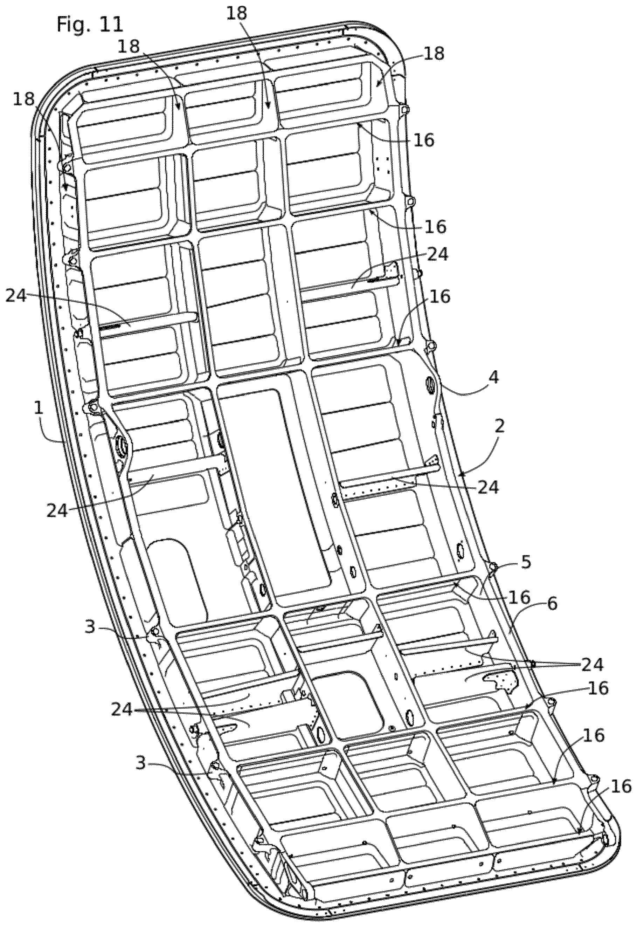

La porte des figures 1 et 2 est une porte monolithique, faite d'une seule pièce, ne nécessitant aucun assemblage d'éléments de structure. En variante (voir figure 11 et fin de la description, cette structure monolithique peut optionnellement être hybride et recevoir des éléments complémentaires de structure rapportés).

La porte comprend une peau extérieure qui sera rendue étanche par rapport au fuselage par l'adjonction de joints et de hublots. Cette peau extérieure présente ici une épaisseur allant de quelques millimètres jusqu'à environ un centimètre.

La tenue mécanique de la peau extérieure 1 est assurée par une membrure 2 constituée de poutres horizontales 16 et verticales 18 se croisant, dans le présent exemple, à angle droit, sans aucune pièce de liaison rapportée.

La porte comprend de plus des butées de verrouillage 3 destinées à coopérer avec un mécanisme situé sur l'encadrement de porte pour le verrouillage de la porte en position fermée. La porte comprend également d'autres équipements tels que des supports 4 pour le montage en rotation d'un arbre transversal destiné aux mécanismes qui seront portés par la porte.

Les poutres 16, 18 constituants la membrure 2 comportent chacune une âme 5 formée d'une paroi plane d'une épaisseur prédéterminée (de l'ordre du millimètre jusqu'au demi-centimètre) qui est saillante de la peau extérieure 1. Dans le présent exemple, l'âme 5 est saillante sensiblement perpendiculairement à la peau 1. Les poutres 16, 18 comportent également une semelle 6 s'étendant perpendiculairement à l'âme 5, du côté opposé à la peau 1. Les semelles 6 s'étendent de préférence sensiblement perpendiculairement à la peau 1.

La membrure 2 présente ainsi une face externe connectée à la peau extérieure 1 et une face interne connectée aux semelles 6.

La porte présente par ailleurs, dans cet exemple, une courbure selon un axe horizontal pour s'adapter à la forme cylindrique du fuselage de l'aéronef. En variante, la porte peut également présenter une double courbure, avec une courbure selon un axe vertical, en plus de la courbure selon un axe horizontal, pour s'adapter à un fuselage de forme effilée.

Au niveau des jonctions entre les poutres 16, 18, les âmes 5 des poutres sont rejointes par continuité de matière de même que les semelles 6 qui forment des croisillons. Une porte particulièrement rigide et présentant une importante résistance statique et dynamique est ainsi obtenue.

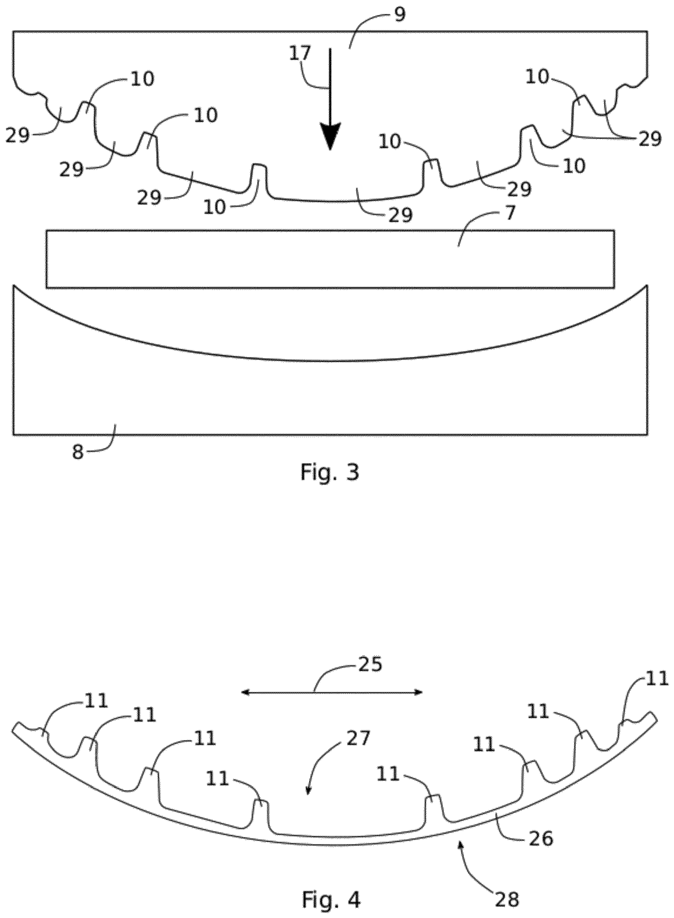

Les figures 3 à 10 illustrent le procédé de fabrication de la porte des figures 1 et 2.

Une première étape consiste à produire une ébauche forgée sensiblement aplatie par tout moyen de forgeage connu, par exemple par laminage à froid, forge libre, ou roulage à chaud. Cette opération est réalisée sur un alliage matriçable adapté à l'aéronautique, tel qu'un alliage d'aluminium 7050, 7010, ou 2050. L'ébauche forgée peut être par exemple un parallélépipède rectangle correspondant aux dimensions de la porte. Cette ébauche est sensiblement plane, c'est-à-dire que son épaisseur est sensiblement constante, avec éventuellement de légères variations d'épaisseur pour suivre les besoins en matière localement sur la surface de la porte.

Dans une étape suivante, illustrée à la figure 3, l'ébauche forgée 7 est matricée entre une matrice inférieure 8 et une matrice supérieure 9 selon une direction de matriçage 17. La figure 3 est une vue schématique de principe, selon une coupe correspondant à une coupe selon un plan vertical de la porte, avec des formes et des proportions schématisées.

Dans cet exemple, l'ébauche forgée 7 peut être constituée par une forme s'étendant selon un plan (l'ébauche 7 est ici un parallèle rectangle). En variante, l'ébauche 7, tout en présentant une épaisseur sensiblement constante, peut être pré-cintrée pour présenter d'office la courbure correspondant à la courbure de la porte finie.

La matrice inférieure 8 comporte une surface de travail qui est lisse et qui correspond à la surface externe de la peau extérieure 1. La matrice supérieure 9 est destinée à former une structure alvéolée dans l'ébauche 7. La matrice supérieure 9 définit à cet effet des alvéoles en négatif grâce à des poinçons 29 dont la forme correspond, sur la porte finie et suite aux opérations d'usinage, aux espaces vides entre les poutres 16, 18 de la membrure 2. Entre les poinçons 29, la matrice supérieure 9, comporte des évidements 10 destinés à former de nervures correspondant aux poutres 16, 18 de la membrure 2.

La figure 3 montre schématiquement que la largeur des évidements 10 a tendance à augmenter en allant du milieu vers les bords de la porte, selon la direction 25 (qui correspond à la direction verticale de la porte).

La figure 4 illustre le résultat de l'opération de matriçage correspondant à la porte des figures 1 et 2. En pratique, le résultat de la figure 4 pourra être obtenu avec une ou plusieurs opérations de matriçage car il se peut que les formes requises requièrent plusieurs opérations de matriçage avec une augmentation progressive de la finesse des passes.

Le matriçage est réalisé en rapprochant les matrices à la presse jusqu'à une distance de garde entre les matrices, cette distance correspondant à l'épaisseur souhaitée pour la paroi correspondant à la peau extérieure 1. En référence à la figure 4, la pièce matricée 26 obtenue est une structure alvéolaire présentant une face ouverte (la face correspondant à la face interne de la porte) et une face fermée (la face correspondant à la face externe de la porte), qui est fermée par une paroi dont l'épaisseur correspond à la distance de garde et qui correspond à la peau extérieure 1.

Sur la figure 4, la pièce matricée 26 présente huit nervures de matière 11, correspondant aux huit poutres horizontales 16 de la porte.

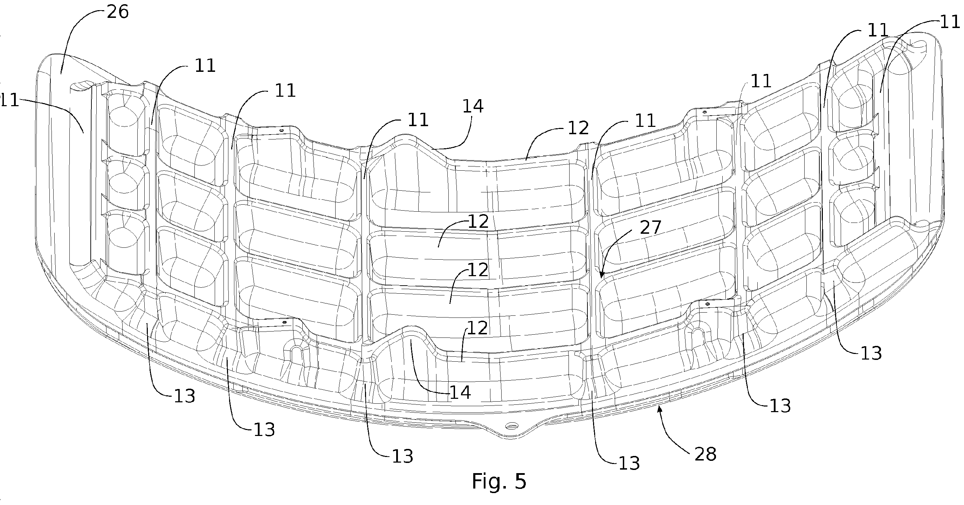

La pièce matricée est également représentée en perspective à la figure 5. La pièce matricée 26 présentant le cintrage définitif correspondant à la courbure de la porte et comprend les nervures 11 correspondant aux poutres horizontales 16 ainsi que des nervures 12 correspondant aux poutres verticales 18.

La pièce matricée de la figure 5 comporte de plus des blocs de matière 13 situés aux emplacements des butées 3 de la porte, ainsi que des blocs de matière 14 situés aux emplacements des supports 4, et éventuellement d'autres blocs de matière supplémentaires pour tout autre équipement prévu sur la porte.

Toutes les nervures 11, 12 et blocs de matière 13, 14 présentent un angle de dépouille relatif à l'opération de matriçage, par exemple 7° de part et d'autre de la direction de matriçage. Pour les nervures verticales 12, qui s'étendent selon un plan parallèle à la direction de matriçage 17, la courbure de la porte n'interfère pas avec le matriçage et l'angle de dépouille sera simplement appliqué de part et d'autre de la nervure 12.

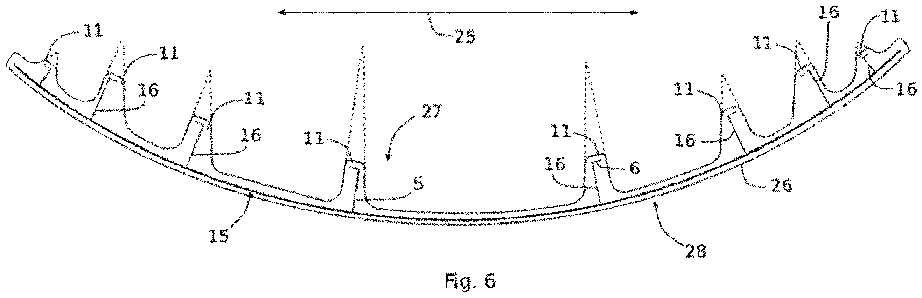

Pour ce qui est des nervures horizontales 11, le matriçage interfère avec la courbure de porte. La figure 6 illustre la pièce matricée 26 avec, en surimpression, l'illustration du profil 15 de la porte finie. Ce profil 15 comporte donc la peau extérieure 1 ainsi que les huit poutres 16 horizontales de la porte. Cette figure rend compte de la matière à enlever sur chaque nervure 11 pour constituer les poutres 16.

Sur la figure 6, chaque forme de nervure 11 (et donc la forme de chaque évidement 10 de la matrice supérieure 9) est prévue en fonction de l'orientation des poutres 16 souhaitées. Chaque forme de nervure 11 correspond à une forme d'évidement 10 de la matrice supérieure 9.

Par rapport à la direction de matriçage 17, les poutres les plus proches de l'axe horizontal médian de la porte sont quasiment parallèles à la direction de matriçage 17 de sorte que la nervure 11 correspondante entoure sensiblement symétriquement la future poutre 16 et la nervure 11 est donc sensiblement symétrique.

Au fur et à mesure de l'éloignement vers les extrémités haute et basse de la porte, les nervures 11 sont plus épaisses car l'inclinaison de la future poutre 16 entraine une dissymétrie :
- sur un flanc, la nervure 11 vient au plus près de la future poutre 16, sensiblement parallèlement à l'âme 5 ;
- sur l'autre flanc, la nervure 11 s'éloigne de la future poutre 16, avec un angle proche du double de l'angle de dépouille, mesuré à partir de la future poutre 16.

Ainsi, les nervures 11 situées plus proche du centre (selon la direction de courbure 25) présentent, par rapport aux nervures 11 situées plus loin du centre, c'est-à-dire plus proche des extrémités haute et basse de la porte :
- une épaisseur inférieure ;
- des parois de flanc formant un angle inférieur entre elles.

La pièce matricée 26 est ensuite usinée pour que les poutres 16, 18 soient produites par enlèvement de matière sur les nervures 11 et 12.

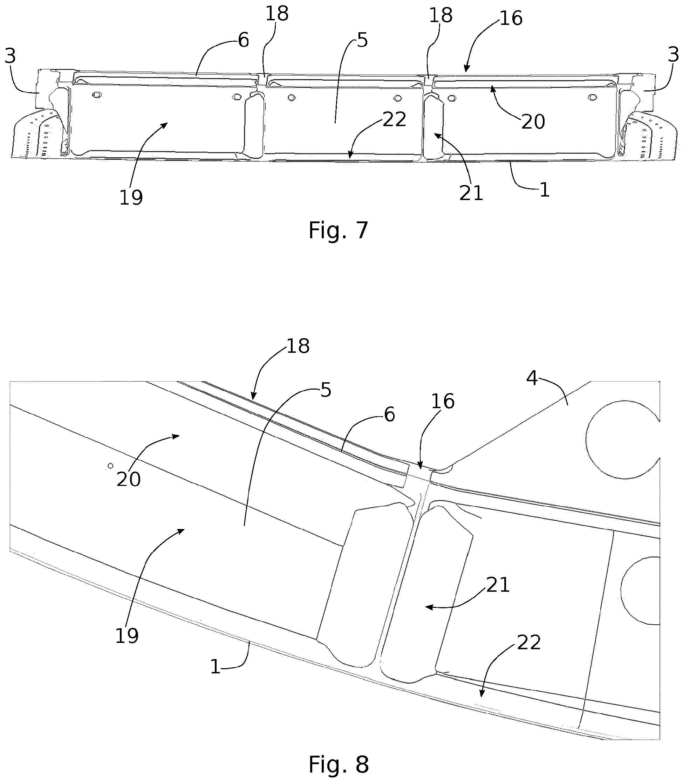

La figure 7 est une vue en coupe de la porte des figures 1 et 2 selon un plan horizontal médian. Cette figure 7 illustre les différentes zones d'usinage nécessaires à la formation des poutres 16, 18. Ces zones d'usinage sont :
- des zones 19 correspondant au flanc de l'âme 5 de la poutre ;
- des zones 20 correspondant au-dessous des semelles 6 ;
- des zones 21 correspondant à la jonction entre les âmes 5 des poutres 16, 18 ;
- des zones 22 correspondant à la jonction entre la membrure 2 et la peau extérieure 1.

Ces zones sont les mêmes pour toutes les poutres 16, 18 de la porte.

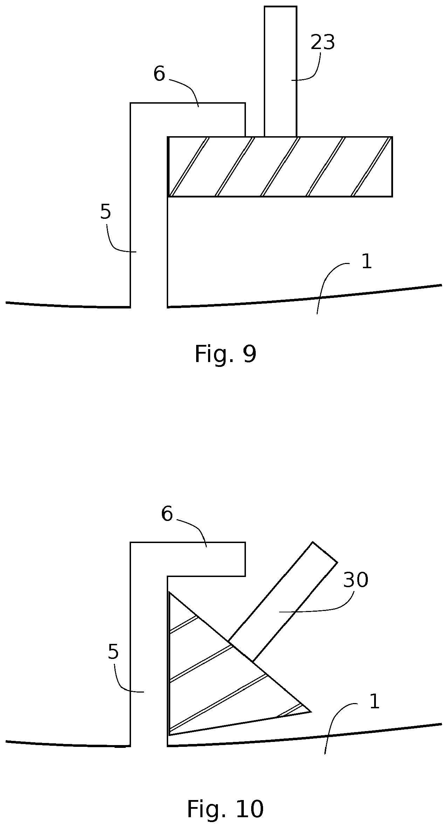

La figure 8 est une vue agrandie montrant les zones d'usinage, cette fois-ci en coupe verticale d'une portion de la porte. Dans un mode de réalisation particulièrement avantageux, la zone d'usinage 20 s'étend sur le dessous de la semelle 6 et sur une portion des flancs de l'âme 5. L'opération d'usinage de cette zone est réalisée conformément à la figure 9 avec une fraise trois tailles 23 dont le diamètre est adapté à la largeur de la semelle 6 correspondante. La fraise trois tailles 23 usine ainsi le dessous de la semelle 6 et une portion supérieure de l'âme 5 en une passe, avec une accessibilité favorable bien que cette opération soit menée dans un recoin.

Cette opération d'usinage permet ainsi, en une seule passe, de définir un renfoncement délimité d'une part par l'âme 5 et d'autre part par la semelle 6.

Une autre opération d'usinage visant la zone 19 vise ensuite à terminer l'usinage du flanc de l'âme 5. Cette opération d'usinage est menée conformément à la figure 10 par une fraise conique 30 qui favorise également l'accessibilité dans ce contexte. La fraise conique 30 usine la portion de l'âme 5 située sous une semelle 6, l'axe de la fraise étant oblique par rapport au plan de l'âme 5.

Les opérations d'usinage des figures 9 et 10 permettent en deux types simples d'opérations d'usinage de réaliser les formes les plus inaccessibles de la membrure 2, et les plus essentielles pour la constitution de la porte.

Les autres contours de la semelle 6, les buttés 3, et supports 4, peuvent par ailleurs être usinés de manière classique par des fraises, des forets, et tout autre outil classique.

De préférence, la zone 22 d'usinage peut être réalisée par une fraise sphérique parcourant la jonction entre l'âme 5 et la peau extérieure 1.

De préférence, l'usinage de la zone 21 est réalisé par une fraise hémisphérique travaillant verticalement et dont la longueur de la broche est adaptée au problème d'accessibilité.

De plus, les surfaces formant les faces interne et externe de la peau extérieure 1 peuvent être obtenues directement par le matriçage, ou également usinées, en fonction de l'état de surface et des tolérances dimensionnelles souhaitées.

La figure 11 représente une variante de la porte des figures 1 et 2. Selon cette variante, la majorité de la membrure 2 est constituée grâce au procédé selon l'invention. Des poutres supplémentaires 24 sont cependant rapportées sur la membrure par des moyens de fixation connus. Une telle porte combine ainsi des tronçons obtenus selon l'invention et des tronçons rapportés de manière classique.

La porte est ainsi obtenue uniquement par des opérations permettant de bénéficier des propriétés mécaniques favorables apportées par le forgeage depuis la matière première jusqu'au produit fini. La pièce matricée 26 est en effet prévue pour subir ces opérations d'usinage qui n'interfèrent pas avec l'orientation des fibres de la matière. L'opération de matriçage peut de plus être réglée en agissant sur des paramètres tels que la température de matriçage, l'épaisseur et les formes de l'ébauche 7, ou tout autre paramètre des techniques de forge, pour faire varier des caractéristiques mécaniques de l'ensemble de la porte, telles que la limite élastique ou la limite à la rupture.

Des variantes de réalisation du procédé de fabrication de la porte d'aéronef peuvent être mises en oeuvre sans sortir du cadre de l'invention. En variante par rapport aux figures 9 et 10, la semelle 6 peut être centrée sur l'âme 5 plutôt qu'être en porte-à-faux.

## Revendications

1. Procédé de fabrication d'une porte d'aéronef présentant une structure monolithique comprenant d'une seule pièce une peau extérieure (1) et une membrure interne (2), la membrure interne (2) comportant au moins un tronçon présentant : une âme (5) rattachée transversalement à la peau extérieure (1) ; et une semelle (6) opposée à la peau extérieure (1) ;
ce procédé étant **caractérisé en ce qu'**il comporte les étapes suivantes :
- production d'une ébauche forgée (7) d'épaisseur sensiblement constante, à partir d'un alliage métallique matriçable ;
- matriçage de l'ébauche forgée (7) entre une matrice inférieure (8) sensiblement lisse et une matrice supérieure (9) définissant des alvéoles, une distance de garde étant maintenue entre la matrice inférieure (8) et la matrice supérieure (9), et obtention d'une pièce matricée (26) à structure alvéolaire présentant une face ouverte (27) et une face fermée (28) par une paroi dont l'épaisseur correspond à la distance de garde ;
- usinage des parois internes de la structure alvéolaire de la pièce matricée (26) pour définir au moins un renfoncement délimité : par une âme (5) reliant la face fermée (28) et la face ouverte (26) ; et par une semelle (6) saillante sensiblement perpendiculairement à l'âme (5), sur la face ouverte (27) de la pièce matricée (26).

2. Procédé selon la revendication 1, **caractérisé en ce que** la matrice supérieure (9) comporte des poinçons (29) entourés d'évidements (10) définissant lesdites alvéoles.

3. Procédé selon l'une des revendications précédentes, **caractérisé en ce que** la matrice inférieure (8) et la matrice supérieure (9) sont cintrées selon une courbure définissant une courbure pour la porte d'aéronef.

4. Procédé selon la revendication 3, **caractérisé en ce que** la structure alvéolaire de la pièce matricée (26) est réalisée par des nervures (11,12) se croisant.

5. Procédé selon la revendication 4, **caractérisé en ce que** des nervures (11) sont sensiblement perpendiculaires à la direction de courbure (25), et **en ce que**, parmi ces nervures (11) sensiblement perpendiculaires à la direction de courbure (25), celles situées plus proche du centre de la pièce matricée (26), dans la direction de courbure (25), présentent une épaisseur inférieure à celles situées plus loin du centre.

6. Procédé selon la revendication 5, **caractérisé en ce que**, parmi lesdites nervures (11) sensiblement perpendiculaires à la direction de courbure (25), celles situées plus proche du centre de la pièce matricée (26), selon la direction de courbure (25), présentent des parois de flanc formant un angle inférieur à l'angle formé par les parois de flanc de celles situées plus loin du centre.

7. Procédé selon l'une des revendications 3 à 6, **caractérisé en ce que** l'ébauche forgée (7) est sensiblement plane et est de plus cintrée par l'opération de matriçage.

8. Procédé selon l'une des revendications 3 à 6, **caractérisé en ce que** l'ébauche forgée (7) est pré-cintrée selon la même courbure que le cintrage des matrices (8,9).

9. Procédé selon l'une des revendications précédentes, **caractérisé en ce que** l'étape d'usinage comporte une opération d'usinage par une fraise trois tailles (23) usinant simultanément le dessous de la semelle (6) et une portion de l'âme (5) correspondante.

10. Procédé selon l'une des revendications précédentes, **caractérisé en ce que** l'étape d'usinage comporte une opération d'usinage par une fraise conique (30) d'une portion de l'âme (5) située sous une semelle (6), l'axe de la fraise étant oblique par rapport au plan de l'âme (5).

11. Procédé selon l'une des revendications précédentes, **caractérisé en ce que**, durant l'opération de matriçage, des blocs de matière (13) sont formés sur la structure alvéolaire de la pièce matricée (26), et **en ce qu'**il comporte une étape d'usinage supplémentaire de ces blocs (13) en butées de verrouillage (3) de la porte d'aéronef.

## Patentansprüche

1. Verfahren zur Herstellung einer Luftfahrzeugtür mit einer monolithischen Struktur, die aus einem einzigen Stück eine Außenhaut (1) und einen Innenspant (2) aufweist, wobei der Innenspant (2) mindestens einen Abschnitt umfasst, der Folgendes aufweist: einen quer an der Außenhaut (1) angebrachten Kern (5) und eine der Außenhaut (1) gegenüberliegende Sohle (6);
wobei das Verfahren **dadurch gekennzeichnet ist, dass** es die folgenden Schritte umfasst:
- Herstellung eines geschmiedeten Rohlings (7) mit im Wesentlichen konstanter Dichte aus einer gesenkschmiedbaren Metalllegierung;
- Gesenkschmieden des geschmiedeten Rohlings (7) zwischen einem im Wesentlichen glatten Untergesenk (8) und einem Obergesenk (9), das Zellen definiert, wobei zwischen dem Untergesenk (8) und dem Obergesenk (9) ein Schutzabstand eingehalten wird, und Erhalten eines gesenkgeschmiedeten Teils (26) mit einer Zellenstruktur, das eine offene Seite (27) und eine Seite (28), die durch eine Wand geschlossen ist, deren Dicke dem Schutzabstand entspricht, aufweist;
- Bearbeiten der Innenwände der Zellenstruktur des gesenkgeschmiedeten Teils (26), um mindestens eine Vertiefung zu definieren, die begrenzt ist durch: einen Kern (5), der die geschlossene Seite (28) und die offene Seite (26) verbindet; und eine Sohle (6), die im Wesentlichen senkrecht zum Kern (5) auf der offenen Seite (27) des gesenkgeschmiedeten Teils (26) vorsteht.

2. Verfahren nach Anspruch 1, **dadurch gekennzeichnet, dass** das Obergesenk (9) Stempel (29) aufweist, die von Aussparungen (10) umgeben sind, die die Zellen definieren.

3. Verfahren nach dem vorangehenden Anspruch, **dadurch gekennzeichnet, dass** das Untergesenk (8) und das Obergesenk (9) mit einer Krümmung gebogen werden, die eine Krümmung für die Luftfahrzeugtür definiert.

4. Verfahren nach Anspruch 3, **dadurch gekennzeichnet, dass** die Zellenstruktur des gesenkgeschmiedeten Teils (26) durch sich kreuzende Rippen (11, 12) gebildet wird.

5. Verfahren nach Anspruch 4, **dadurch gekennzeichnet, dass** Rippen (11) im Wesentlichen senkrecht zur Krümmungsrichtung (25) verlaufen und dass von diesen zur Krümmungsrichtung (25) im Wesentlichen senkrechten Rippen (11) diejenigen, die in der Krümmungsrichtung (25) näher zur Mitte des gesenkgeschmiedeten Teils (26) liegen, eine geringere Dicke aufweisen als diejenigen, die weiter von der Mitte entfernt angeordnet sind.

6. Verfahren nach Anspruch 5, **dadurch gekennzeichnet, dass** von den zur Krümmungsrichtung (25) im Wesentlichen senkrechten Rippen (11) diejenigen, die in der Krümmungsrichtung (25) näher zur Mitte des gesenkgeschmiedeten Teils (26) liegen, Flankenwände aufweisen, die einen Winkel bilden, der kleiner ist als der Winkel, der von den Flankenwänden derjenigen gebildet wird, die weiter von der Mitte entfernt angeordnet sind.

7. Verfahren nach einem der Ansprüche 3 bis 6, **dadurch gekennzeichnet, dass** der geschmiedete Rohling (7) im Wesentlichen eben ist und außerdem durch den Gesenkschmiedevorgang gebogen wird.

8. Verfahren nach einem der Ansprüche 3 bis 6, **dadurch gekennzeichnet, dass** der geschmiedete Rohling (7) mit der gleichen Krümmung vorgebogen wird wie die Biegung der Gesenke (8, 9).

9. Verfahren nach dem vorangehenden Anspruch, **dadurch gekennzeichnet, dass** der Bearbeitungsschritt einen Vorgang der Bearbeitung durch einen dreiseitig schneidenden Fräser (23) umfasst, der die Unterseite (6) und einen entsprechenden Abschnitt des Kerns (5) bearbeitet.

10. Verfahren nach dem vorangehenden Anspruch, **dadurch gekennzeichnet, dass** der Bearbeitungsschritt einen Vorgang der Bearbeitung eines unter einer Sohle (6) befindlichen Abschnitts des Kerns (5) durch einen konischen Fräser (30) umfasst, wobei die Achse des Fräsers in Bezug auf die Ebene des Kerns (5) schräg ist.

11. Verfahren nach dem vorangehenden Anspruch, **dadurch gekennzeichnet, dass** während des Gesenkschmiedevorgangs auf der Zellenstruktur des gesenkgeschmiedeten Teils (26) Materialblöcke (13) gebildet werden und dass es einen zusätzlichen Schritt der Bearbeitung dieser Blöcke (13) zu Verriegelungsanschlägen (3) der Luftfahrzeugtür umfasst.

## Claims

1. A method for manufacturing an aircraft door having a monolithic structure comprising an outer skin (1) and an internal frame (2) in one piece, the internal frame (2) having at least one portion having: a core (5) attached transversely to the outer skin (1); and a flange (6) opposite the outer skin (1);
this method being **characterized in that** it has the following steps:
- producing a forged blank (7) with a substantially constant thickness from a metal alloy that can be stamped;
- stamping the forged blank (7) between a substantially smooth lower die (8) and an upper die (9) defining cells, a clearance being retained between the lower die (8) and the upper die (9), and obtaining a stamped part (26) with a cellular structure having an open face (27) and a closed face (28) closed by a wall with a thickness corresponding to the clearance;
- machining the internal walls of the cellular structure of the stamped part (26) to define at least one reinforcement delimited: by a core (5) connecting the closed face (28) and the open face (26); and by a flange (6) projecting substantially perpendicularly to the core (5), on the open face (27) of the stamped part (26).

2. The method as claimed in claim 1, **characterized in that** the upper die (9) has punches (29) surrounded by recesses (10) defining said cells.

3. The method as claimed in either of the preceding claims, **characterized in that** the lower die (8) and the upper die (9) are arched along a curvature defining a curvature for the aircraft door.

4. The method as claimed in claim 3, **characterized in that** the cellular structure of the stamped part (26) is produced by intersecting ribs (11, 12).

5. The method as claimed in claim 4, **characterized in that** some ribs (11) are substantially perpendicular to the direction of curvature (25), and **in that**, from among these ribs (11) that are substantially perpendicular to the direction of curvature (25), those located closer to the center of the stamped part (26), in the direction of curvature (25), have a smaller thickness than those located further away from the center.

6. The method as claimed in claim 5, **characterized in that**, from among said ribs (11) that are substantially perpendicular to the direction of curvature (25), those located closer to the center of the stamped part (26), in the direction of curvature (25), have side walls forming an angle less than the angle formed by the side walls of those located further away from the center.

7. The method as claimed in one of claims 3 to 6, **characterized in that** the forged blank (7) is substantially planar and is moreover curved by the stamping operation.

8. The method as claimed in one of claims 3 to 6, **characterized in that** the forged blank (7) is pre-arched along the same curvature as the arching of the dies (8, 9).

9. The method as claimed in one of the preceding claims, **characterized in that** the machining step includes a machining operation using a side-and-face milling cutter (23) machining the bottom of the flange (6) and a corresponding portion of the core (5) at the same time.

10. The method as claimed in one of the preceding claims, **characterized in that** the machining step includes a machining operation, using a conical milling cutter (30), of machining a portion of the core (5) located under a flange (6), the axis of the milling cutter being oblique with respect to the plane of the core (5).

11. The method as claimed in one of the preceding claims, **characterized in that**, during the stamping operation, blocks (13) of material are formed on the cellular structure of the stamped part (26), and **in that** it has an additional machining step of machining these blocks (13) to form locking stops (3) for the aircraft door.
